# EUROPÄISCHE PATENTSCHRIFT

(11) **EP 1 349 634 B1**
(45) Veröffentlichungstag und Bekanntmachung des Hinweises auf die Patenterteilung: **28.07.2004**
(21) Anmeldenummer: 01985878.6
(22) Anmeldetag: 13.12.2001
(51) Int. Cl.: B01D 29/11, B22F 3/11

(54) **FILTERKERZE MIT EINEM GESINTERTEN FILTERROHR**
FILTERING CANDLE COMPRISING A SINTERED FILTERING TUBE
BOUGIE FILTRANTE DOTEE D'UN TUBE FILTRANT FRITTE

(30) Priorität: 19.12.2000 DE 10063462
(43) Veröffentlichungstag der Anmeldung: 08.10.2003
(73) Patentinhaber: GKN Sinter Metals GmbH, 42477 Radevormwald (DE)
(72) Erfinder: STEIGERT, Simon, 42477 Radevormwald (DE)
(74) Vertreter: Maxton Langmaack & Partner
(86) Internationale Anmeldenummer: PCT/EP2001/014664
(87) Internationale Veröffentlichungsnummer: WO 2002/049739

(56) Entgegenhaltungen:
- EP-A- 0 819 459
- WO-A-00/72943
- DE-A- 4 232 891
- DE-A- 19 924 675
- US-A- 5 564 755

## Beschreibung

Die vorliegende Erfindung betrifft eine Filterkerze mit einem gesinterten Filterrohr und einem mit diesem verbundenen Flansch sowie ein Verfahren zur Herstellung derselben und deren Verwendung.

Zur Befestigung von gesinterten Filterrohren bzw. Einbau derselben ist bekannt, das gesinterte Filterrohr mit einem gesinterten oder aber massiven, d.h. aus Gußeisen o.ä. hergestellten Flansch zu versehen, welcher Befestigungsmittel zur Befestigung der aus dem gesinterten Filterrohr und dem Flansch gebildeten Filterkerze aufweist. Wird ein gesinterter Flansch verwendet, so ergeben sich insbesondere für Anwendungen, bei welchen eine starke mechanische Beanspruchung der Filterkerze stattfindet, Probleme hinsichtlich der Festigkeit derselben.

Bei der Verwendung von Filterkerzen, welche einen massiven Flansch aufweisen, treten aufgrund der Verschiedenartigkeit des Flanschmaterials und des Filterrohrmaterials sowie aufgrund der unterschiedlichen physikalischen Beschaffenheit derselben insbesondere im Verbindungsbereich von massivem Flansch- und gesintertem Filterrohr bei starker mechanischer oder thermischer Beanspruchung Risse auf, welche letztendlich zu einer Totalschädigung der Filterkerze führen und dadurch die Lebensdauer derartiger Filterkerzen stark verkürzen.

Insbesondere ist es bis heute nicht möglich, eine sichere und feste Verbindung zwischen einem Flansch und einem gesinterten Filterrohr herzustellen, wenn das Filterrohr aus sinterfähigem Pulvermaterial hergestellt ist, welches mittlere Durchmesser größer als 200µm aufweist oder aber das Filterrohr aus faserförmigem, sinterfähigem Material hergestellt ist.

Ein beispielhaftes sintermetallurgisches Verfahren zur Herstellung eines Filterkörpers offenbart DE 199 24 675 A1, insbesondere eines Filterkörpers aus Fasern, insbesondere Metallfasern, bei dem die in einem Haufwerk vorliegenden losen Fasern durch Agitation vereinzelt und in eine Form gefüllt und die Füllung unter Erhitzung gesintert wird.

Aufgabe der vorliegenden Erfindung ist es, eine Filterkerze mit einem Flansch und einem gesinterten Filterrohr zur Verfügung zu stellen, welche den an sie gestellten Anforderungen hinsichtlich insbesondere der thermischen und/oder mechanischen Belastbarkeit standhält.

Diese Aufgabe wird erfindungsgemäß gelöst durch eine Filterkerze mit einem gesinterten Filterrohr und einem mit diesem durch Sinterung verbundenen Flansch mit einer auf das Filterrohr hin ausgerichteten und von einem Ansatz ausgehenden ringförmigen Flanschwand, die mindestens zwei senkrecht und winklig zu einer senkrecht zu einer Filterrohrachse liegenden Ebene angeordnete Ausnehmung aufweist, wobei diese Ausnehmungen gegenläufig zueinander angeordnet sind. Durch die spezifische Anordnung der Ausnehmung in der erfindungsgemäßen Filterkerze ist ein mechanisches Lösen des Flansches vom gesinterten Filterrohr nicht mehr möglich. Zudem ist durch die Ausnehmung die Oberfläche des Flansches vergrößert, wodurch sinterfähigem Material, sei es in Pulver- oder Faserform, eine erhöhte Anzahl von Kontaktstellen zur Verfügung gestellt wird. Hierdurch wird dann letztendlich die Verbindungskraft zwischen Flansch und gesintertem Filterrohr erhöht.

Vorteilhafterweise sind mehr als zwei gegenläufig angeordnete Ausnehmungen vorgesehen. Durch die gegenläufige Anordnung der Ausnehmungen kann der Flansch weder von dem gesinterten Filterrohr herausgedreht noch abgezogen werden. Die zwischen dem gesinterten Filterrohr und dem Flansch wirkenden Verbindungskräfte sind bei einer derartigen Anordnung der Ausnehmungen maximal. Zwischen den gegenläufig angeordneten Ausnehmungen sind fingerförmige Bereiche in der Flanschwand ausgebildet. Ein mechanisches Lösen des Flansches vom gesinterten Filterrohr ist unmöglich. Durch Anpassung der Geometrie der Ausnehmungen, insbesondere deren Länge, Breite und Anordnung, insbesondere winklige Anordnung, lassen sich im Hinblick auf die geplante Anwendung der erfindungsgemäßen Filterkerze und die hierbei auf diese wirkenden Kräfte die Filterkerze optimal ausbilden und einstellen.

Vorteilhafterweise weist die erfindungsgemäße Filterkerze mindestens eine Ausnehmung auf, welche als Langbohrung und/oder Langloch und/oder Langnut ausgebildet ist. Hierdurch wird eine weitere Erhöhung der Oberfläche und damit letztendlich der Verbindungskraft zwischen Flansch und gesintertem Filterrohr erzielt.

Besonders bevorzugt ist die Ausnehmung ausgehend von dem dem Ansatz entgegengesetzten Ende der Flanschwand angeordnet. Bei einer derartig ausgestalteten Ausnehmung ist die Oberfläche des Flansches, welche mit dem sinterfähigen Material, welches zur Herstellung des gesinterten Filterrohres verwendet wird, in Kontakt kommt, maximal erhöht. zudem ist die Ausnehmung vorteilhafterweise auf das Filterrohr hin ausgerichtet, so daß eine einfache und vollständige Ausfüllung der Ausnehmung durch sinterfähiges Material ermöglicht ist. Selbstverständlich können zusätzlich Ausnehmungen, auch als Bohrungen ausgebildete, ausgehend von dem Ansatz des Flansches und auf das Filterrohr hin ausgerichtet, gegebenenfalls auch zusätzlich zu der vorgenannt ausgerichteten Ausnehmung, vorgesehen sein.

In einer weiter bevorzugten Ausführungsform weist die Flanschwand an ihrer Außenseite und/oder Innenseite mindestens eine um ihren Umfang umlaufende Nut auf. In Kombination der Ausnehmungen mit der Nut wird eine weitere Verbesserung der Verbindung zwischen Flansch und gesintertem Filterrohr erzielt. Insbesondere ist hierdurch vorteilhafterweise auch ein Abgleiten des mit dem Flansch verbundenen gesinterten Filterrohres verhindert. Bevorzugt weist die Flanschwand weiterhin Bohrungen, insbesondere rund ausgebildete, auf.

Vorteilhafterweise ist der Ansatz mit mindestens einem Befestigungsmittel zur Befestigung der erfindungsgemäßen Filterkerze versehen. Mit diesen kann die erfindungsgemäße Filterkerze in den entsprechenden Apparaturen eingesetzt werden.

Das gesinterte Filterrohr der erfindungsgemäßen Filterkerze ist bevorzugt aus pulverförmigem und/oder faserförmigem Material hergestellt. Hierbei weist das pulverförmige Material vorteilhafterweise einen mittleren Partikeldurchmesser von mindestens 200µm auf. wird faserförmiges Material zur Herstellung des gesinterten Filterrohres verwendet, so weist dieses bevorzugt eine mittlere Länge von mindestens 1mm und einen mittleren Durchmesser von mindestens 40µm auf. Mit der vorliegenden erfindungsgemäßen Filterkerze ist es bei Verwendung der vorgenannten Materialien erstmalig möglich, auch für hohe mechanische und/oder thermische Beanspruchungen Filterkerzen zur verfügung zu stellen, welche eine ausreichend hohe Lebensdauer aufweisen. Im Unterschied zu konventionellen und im Stand der Technik bekannten Filterkerzen weist vorteilhafterweise die erfindungsgemäße Filterkerze bei Verwendung von insbesondere grobpulvrigem und faserigem sinterfähigem Material, welches je nach Verwendungszweck der Filterkerze zur Herstellung des gesinterten Filterrohres verwendet wird, ausreichende Festigkeitswerte im Hinblick auf die Verbindung zwischen Flansch und gesintertem Filterrohr auf.

Unter sinterfähigen Pulvern im Sinne der Erfindung werden Pulver verstanden, hergestellt aus Metall, Metalloxiden, Keramiken und/oder Kunststoffen. Verwendbare metallische Pulver im Sinne der Erfindung sind nicht nur Pulver aus Reinmetallen, sondern auch Pulver aus Metallegierungen und/oder Pulvermischungen aus unterschiedlichen Metallen und Metallegierungen zu verstehen. Dazu gehören insbesondere Stähle, vorzugsweise Chrom-Nickel-Stähle, Bronzen, Nickelbasislegierungen wie Hastalloy, Inconel oder dergleichen, wobei Pulvermischungen auch hochschmelzende Bestandteile enthalten können, wie beispielsweise Platin oder dergleichen. Das verwendete Metallpulver und seine Teilchengröße ist vom jeweiligen Einsatzzweck abhängig. Bevorzugte Pulver sind die Legierungen 316 L, 304 L, Inconel 600, Inconel 625 und Hastalloy B, X und C.

Das sinterfähige Pulver kann dabei aus pulverförmigen und/oder spratzigen Partikeln bestehen. Spratzige sinterfähige Pulver ermöglichen insbesondere, Filterrohre und/oder Flansche geringer Dichte bei gleichzeitig hoher Festigkeit zu erhalten.

Faserförmige sinterfähige Materialien zur Herstellung des Filterrohres und/oder Flansches der erfindungsgemäßen Filterkerze sind insbesondere durch Schmelzextraktion gewonnene Metallfasern. Besonders bevorzugt sind hierbei Metallfasern aus einer Eisen-Chrom-Aluminium-Legierung oder einer Nickel-Aluminium-Legierung. Bevorzugt werden schmelzexrahierte Metallfasern auf der Basis einer Eisen-Chrom-Aluminium-Legierung verwendet mit Gehalten an Chrom in einem Bereich von etwa 10-25 Gew% und Aluminium in einem Bereich von etwa 5-20 Gew%, jeweils bezogen auf die Gesamtmenge der eingesetzten Metallfasern. Fasern mit einem derart hohen Aluminiumanteil weisen eine sehr gute Temperaturbeständigkeit insbesondere bei der Heißgasfiltration auf. Die Eisen-Chrom-Aluminium-Legierung kann hierbei Zusätze von Titan und/oder Zirkon und/oder Hafnium und/oder Selten Erdmetalle enthalten. Weiterhin können schmelzextrahierte Metallfasern auf der Basis einer Nickel-Aluminium-Legierung verwendet werden mit einem Aluminiumgehalt in einem Bereich von etwa 10-40 Gew%, wobei Zusätze von Tantal und/oder Zirkon und/oder Hafnium und/oder Bor und/oder Seltenerdmetallen vorgesehen sein können.

Besonders bevorzugt ist der Flansch massiv ausgebildet, d.h. er ist nicht in einem Sinterprozeß hergestellt worden. Insbesondere Gußeisen und Stahl finden bevorzugt Verwendung. Jedoch kann auch vorgesehen sein, daß der Flansch aus sinterfähigem Material hergestellt ist, wobei dann vorzugsweise Metallpulver mit kleinen Partikelgrößen in einem Bereich von etwa 0,05µm bis 100µm eingesetzt werden.

Weiterhin betrifft die vorliegende Erfindung ein Verfahren zur Herstellung einer erfindungsgemäßen Filterkerze, wobei
- in einem ersten Schritt ein Flansch in eine Preßform gelegt wird;
- in einem zweiten Schritt die Preßform mit sinterfähigem Material gefüllt wird, bis die Flanschwand vom Material umhüllt und die Ausnehmung vom Material vollständig ausgefüllt ist;
- in einem dritten Schritt das Material mit dem Flansch gepreßt und anschließend
- in einem vierten Schritt der so erhaltene Filterkerzen-Rohling gesintert wird.

Bevorzugt erfolgt hierbei der Preßvorgang isostatisch. Werden als sinterfähiges Material sinterfähige Fasern verwendet, so werden diese bevorzugt unter Einwirkung von gerichteten mechanischen Schwingungen beim Einfüllen in die Preßform vereinzelt. Die Agitation des Haufwerks durch Einwirkung von gerichteten mechanischen Schwingungen kann beispielsweise dadurch bewirkt werden, daß die Faserzufuhr aus dem Faserhaufwerk zur Preßform über einen Schwingförderer erfolgt. Ist der Flansch aus sinterfähigem Material hergestellt, so wird bevorzugt der diesem entsprechende vorgepreßte pulvermetallurgische Grünpreßling in die Preßform eingelegt. Bei Verwendung eines derartigen Flansches ist vorteilhaft, daß dieser keiner weiteren Nachbearbeitung bedarf, da alle notwendigen Ausformungen, beispielsweise Bohrungen als Befestigungsmittel, Nuten, gegenläufig angeordnete Ausnehmungen und/oder Bohrungen in den Flanschwänden bereits bei der Herstellung des Formteils geformt werden können. Insbesondere entfällt hierbei jegliche mechanische Nachbearbeitung.
Schließlich betrifft die vorliegende Erfindung die Verwendung von Filterkerzen in der Heißgasfiltration, in Membranreaktoren, als Katalysator, als Luft- und/oder Gasfilter, als Filter zum Filtern von Flüssigkeiten und/oder zur Separierung und Konzentration von Materialien.

Diese und weitere Vorteile der vorliegenden Erfindung werden anhand der folgenden Figuren erläutert:
- Fig. 1:: Perspektivische Ansicht einer erfindungsgemäßen Filterkerze;
- Fig. 2:: Perspektivische Draufsicht auf einen erfindungsgemäßen Flansch; und
- Fig. 3:: Schematische Draufsicht auf den erfindungsgemäßen Flansch.

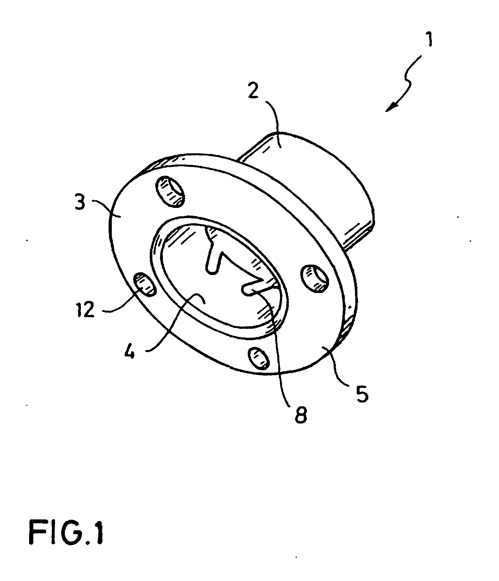

Fig. 1 zeigt eine insgesamt mit dem Bezugszeichen 1 bezeichnete erfindungsgemäße Filterkerze, welche aus einem gesinterten Filterrohr 2 und einem massiven Flansch 3, hergestellt aus Grauguß, besteht. Der Flansch 3 weist einen Ansatz 5 mit Bohrungen 12 zur Befestigung der Filterkerze 1 in einer Apparatur o.ä. auf. Weiterhin weist der Flansch 3 eine Flanschwand 4 mit Ausnehmung 8 auf. Diese Ausnehmungen 8 sind gegenläufig zueinander und ausgehend von dem dem Ansatz 5 des Flansches 3 entgegengesetzten Ende der Flanschwand 4 angeordnet. Sie sind als Langbohrungen ausgebildet.

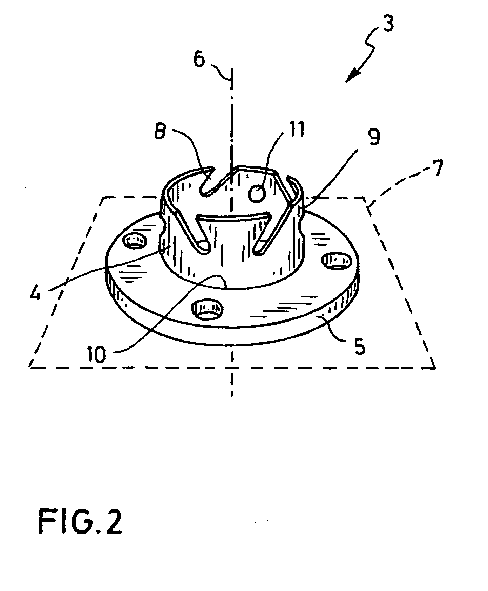

Fig. 2 zeigt eine Ausführungsform eines Flansches, wie er auch in der Filterkerze 1 gemäß Fig. 1 verwendet ist. Der insgesamt mit dem Bezugszeichen 3 versehene Flansch weist mehrere Ausnehmungen 8 auf, welche zueinander gegenläufig angeordnet sind, und zwischen diesen Ausnehmungen 8 fingerförmig ausgebildete Bereiche der Flanschwand 4 aufweist.

Weiterhin weist die Flanschwand 4 an ihrer Außenseite um den Umfang der Flanschwand 4 umlaufende Nuten 10 auf. Zusätzlich zu den Ausnehmungen 8 können in der Flanschwand 4 auch Bohrungen 11 vorgesehen sein. Die Ausnehmungen 8 sind senkrecht und winklig zu einer senkrecht zur Filterrohrachse 6 liegenden Ebene 7 angeordnet. Der Winkel zwischen der Ebene 7 und den Ausnehmungen 8 kann hierbei in einem Bereich von etwa 0° bis 90° liegen. Bevorzugt ist jedoch ein Bereich von etwa 10° bis 80°, weiter bevorzugt von etwa 30°bis 60°.

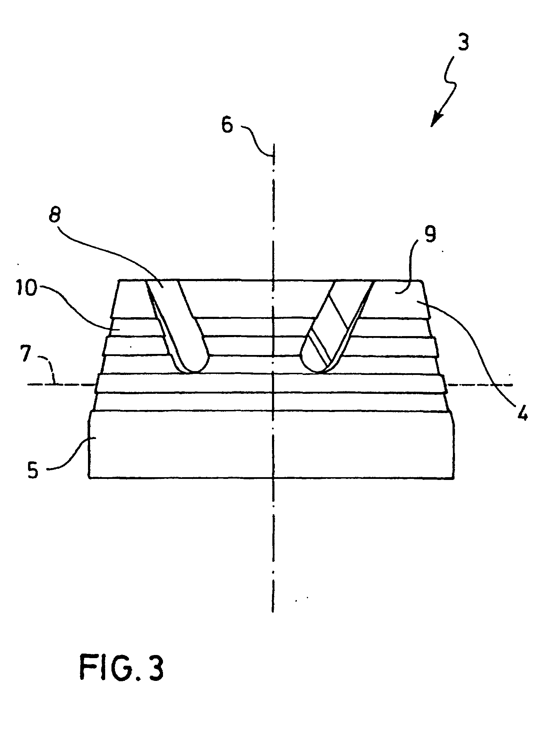

Fig. 3 zeigt eine schematische Darstellung des Flansches 3, wodurch die in Fig. 2 gezeigten Merkmale nochmals verdeutlicht dargestellt sind. Insbesondere sind in Fig. 3 die um den Umfang der Flanschwand 4 umlaufenden Nuten 10 deutlich zu entnehmen. Der Ansatz 5 des Flansches 3 ist dabei ohne Befestigungsmittel zum Befestigen des Flansches 3 in einer Apparatur gezeigt.

Filterkerzen, bei welchen das gesinterte Filterrohr hergestellt wurde aus metallischen Kurzfasern aus einer Nickel-Aluminium-Legierung (Ni₃Al; Hersteller: beispielsweise Hoeganaes Corp., USA) mit einer mittleren Länge in einem Bereich von etwa 4 bis 8 mm und einem Durchmesser von etwa 80µm, und einem Flansch 3, hergestellt aus korrosionsbeständigem Stahl gemäß DIN-Norm St 1.4571 durch das erfindungsgemäße Verfahren mit isostatischem Pressen bei etwa 2.500 bar und anschließendem Sintern im Vakuum bei etwa 1.220°C, wurden auf einer Versuchsanlage für eine Heißgasfiltration getestet (semi-industrieller Versuchsstand). Auf diesem Versuchsstand konnten Temperaturen bis 800°C simuliert werden. Die eingesetzten Filterkerzen wurden bei 300°C, 500°C und 800°C getestet. Als zu filterndes Medium wurde das Abgas eines Ölbrenners eingesetzt, zu welchem diverse Stäube und Schadgase zudosiert werden konnten. In kurzen zeitlichen Intervallen wurde während des Versuchs die Filterkerze über einen Druckluftstoß von innen nach außen abgereinigt. Der Luftimpuls hatte hierbei einen Überdruck von 6 bar. Die Kerzen wurden in die Versuchsanlage hängend eingebaut, wobei deren Gewicht 4,5 kg ohne Flansch betrug.

Obwohl die Materialien des Filterrohres 2 und des Flansches 3 unterschiedliche und geringe Wärmeausdehnungskoeffizienten aufwiesen, wurden über einen Zeitraum von 4 Wochen unter den vorstehend beschriebenen Belastungen keinerlei Veränderungen in dem Verbindungsbereich zwischen Filterrohr und Flansch festgestellt.

Der vorstehend beschriebene Versuch wurde wiederholt mit Filterkerzen, bei welchen das Filterrohr 2 statt aus Metallfasern aus grobem Edelstahlpulver mit einem mittleren Durchmesser in einem Bereich von etwa 500 bis 700µm hergestellt war. Auch hier konnten keinerlei Veränderungen in dem Verbindungsbereich zwischen Filterrohr 2 und Flansch 3 festgestellt werden.

Die erfindungsgemäße Filterkerze sowie der Flansch sind insbesondere dann vorteilhaft einsetzbar, wenn grobe sinterfähige Materialien oder aber faserförmige sinterfähige Materialien verwendet werden. Darüber hinaus wurden auch deutlich verbesserte Eigenschaften hinsichtlich der Haltbarkeit und Belastbarkeit erzielt bei Verwendung schwer sinterbarer Werkstoffe, insbesondere auch Keramiken. Die erfindungsgemäßen Filterkerzen hielten extrem hohen mechanischen und thermischen Belastungen stand, und dies obwohl das Material des Flansches und des Filterrohres unterschiedliche Wärmeausdehnungskoeffizienten aufwies.

## Patentansprüche

1. Filterkerze (1) mit einem gesinterten Filterrohr (2) und einem mit diesem durch Sinterung verbundenen Flansch (3), **dadurch gekennzeichnet, daß** der Flansch (3) eine auf das Filterrohr (2) hin ausgerichtete und von einem Ansatz (5) ausgehende ringförmige Flanschwand (4) aufweist, die mindestens zwei senkrecht und winklig zu einer senkrecht zur Filterrohrachse (6) liegenden Ebene (7) angeordnete Ausnehmungen (8) aufweist, wobei diese Ausnehmungen (8) gegenläufig zueinander angeordnet sind.

2. Filterkerze gemäß Anspruch 1, **dadurch gekennzeichnet, daß** die Ausnehmung (8) als Langbohrung und/oder Langloch und/oder Langnut ausgebildet ist.

3. Filterkerze gemäß einem der Ansprüche **1** oder 2, **dadurch gekennzeichnet, daß** die Ausnehmung (8) ausgehend von dem dem Ansatz (5) entgegengesetzten Ende der Flanschwand (4) angeordnet ist.

4. Filterkerze gemäß einem der vorhergehenden Ansprüche, **dadurch gekennzeichnet, daß** der Flansch (3) massiv ausgebildet ist.

5. Filterkerze gemäß einem der vorhergehenden Ansprüche, **dadurch gekennzeichnet, daß** die Flanschwand (4) an ihrer Außen- und/oder Innenseite (9) mindestens eine um ihren Umfang umlaufende Nut (10) aufweist.

6. Filterkerze gemäß einem der vorhergehenden Ansprüche, **dadurch gekennzeichnet, daß** die Flanschwand (4) Bohrungen (11) aufweist.

7. Filterkerze gemäß einem der vorhergehenden Ansprüche, **dadurch gekennzeichnet, daß** der Ansatz (5) mit mindestens einem Befestigungsmittel zur Befestigung der Filterkerze (1) versehen ist.

8. Filterkerze nach einem der vorhergehenden Ansprüche, **dadurch gekennzeichnet, daß** das gesinterte Filterrohr (2) aus pulverförmigem und/oder faserförmigem Material hergestellt ist.

9. Filterkerze gemäß einem der vorhergehenden Ansprüche, **dadurch gekennzeichnet, daß** das pulverförmige Material einen mittleren Partikeldurchmesser von mindestens 200µm aufweist.

10. Filterkerze gemäß einem der vorhergehenden Ansprüche, **dadurch gekennzeichnet, daß** das faserförmige Material eine mittlere Länge von mindestens 1mm aufweist.

11. Filterkerze gemäß einem der vorhergehenden Ansprüche, **dadurch gekennzeichnet, daß** das faserförmige Material einen mittleren Durchmesser von mindestens 40µm aufweist.

12. Verfahren zur Herstellung einer Filterkerze (1) gemäß einem der Ansprüche 1 bis 11, **dadurch gekennzeichnet, daß**
- in einem ersten Schritt ein Flansch (3) in eine Preßform gelegt wird;
- in einem zweiten Schritt die Preßform mit sinterfähigem Material gefüllt wird, bis die Flanschwand (4) vom Material umhüllt und die Ausnehmung (8) vom Material vollständig ausgefüllt ist;
- in einem dritten Schritt das Material mit dem Flansch (3) gepreßt und anschließend
- in einem vierten Schritt der so erhaltene Filterkerzen-Rohling gesintert wird.

13. Verfahren gemäß Anspruch 12, **dadurch gekennzeichnet, daß** das Pressen isostatisch erfolgt.

14. Verwendung einer Filterkerze gemäß einem der Ansprüche 1 bis 11 in der Heißgasfiltration, in Membranreaktoren, als Katalysator, als Luft- und/oder Gasfilter, als Filter zum Filtern von Flüssigkeiten und/oder zur Separierung und Konzentration von Materialien.

## Claims

1. Filtering Candle (1), comprising a sintered filtering tube (2) and a collar (3) connected thereto by sintering, **characterized in that** said collar (3) comprises an annular collar wall (4), which is oriented towards said filtering tube (2) and starts from a neck (5) and comprises at least two recesses (8), which are arranged perpendicular and angular in relation to a plane (7), which is arranged perpendicular in relation to a filtering tube axis (6), whereas said recesses (8) are arranged in opposite direction to one another.

2. Filtering candle according to Claim 1, **characterized in that** said recess (8) is formed as elongated borehole and/or elongated hole and/or long groove.

3. Filtering candle according to Claim 1 or 2, **characterized in that** said recess (8) is arranged starting from the end of said collar wall (4) which is arranged opposite said neck (5).

4. Filtering candle according to any of the preceding Claims, **characterized in that** said collar (3) is massive.

5. Filtering candle according to any of the preceding Claims, **characterized in that** said collar wall (4) comprises at its outer side and/or inner side (9) at least one groove (10) running around its circumference.

6. Filtering candle according to any of the preceding Claims, **characterized in that** said collar wall (4) comprises boreholes (11).

7. Filtering candle according to any of the preceding Claims, **characterized in that** said neck (5) is provided with at least one fixing means to fix said filtering candle (1).

8. Filtering candle according to any of the preceding Claims, **characterized in that** said sintered filtering tube (2) is made of powdery and/or fibrous material.

9. Filtering candle according to any of the preceding Claims, **characterized in that** said powdery material has a mean particle diameter of at least 200µm.

10. Filtering candle according to any of the preceding Claims, **characterized in that** said fibrous material has a mean length of at least 1mm.

11. Filtering candle according to any of the preceding Claims, **characterized in that** said fibrous material has a mean diameter of at least 40µm.

12. Method to manufacture a filtering candle (1) according to any of the Claims 1 to 11, **characterized in that**
- as a first step, a collar (3) is placed into a die;
- as a second step, said die is filled with sinterable material until said collar wall (4) is covered in said material and said recess (8) is completely filled up with said material;
- as a third step, said material and said collar (3) are pressed, and subsequently,
- as a fourth step, the filtering candle blank thus obtained is sintered.

13. Method according to Claim 12, **characterized in that** said pressing is isostatic.

14. Utilization of a filtering candle according to any of the Claims 1 to 11 in hot gas filtration, in membrane reactors, as catalyst, as air filter and/or gas filter, as filter to filter liquids and/or for the separation and concentration of materials.

## Revendications

1. Bougie filtrante (1) dotée d'un tube filtrant fritté (2) et d'une bride (3) reliée à celui-ci par frittage, **caractérisée en ce que** la bride (3) présente une paroi de bride (4) annulaire alignée sur le tube filtrant (2) et partant d'un rebord (5), ladite paroi présentant au moins deux évidements (8) disposés perpendiculairement et en angle par rapport à un plan (7) situé perpendiculairement à l'axe du tube filtrant (6), ces évidements (8) étant disposés en sens contraire l'un par rapport à l'autre.

2. Bougie filtrante selon la revendication 1, **caractérisée en ce que** l'évidement (8) a la forme d'un alésage oblong et/ou d'un trou oblong et/ou d'une rainure longitudinale.

3. Bougie filtrante selon l'une quelconque des revendications 1 ou 2, **caractérisée en ce que** l'évidement (8) est disposé en partant de l'extrémité de la paroi de bride (4) opposée au rebord (5).

4. Bougie filtrante selon l'une quelconque des revendications précédentes, **caractérisée en ce que** la bride (3) est réalisée de manière massive.

5. Bougie filtrante selon l'une quelconque des revendications précédentes, **caractérisée en ce que** la paroi de bride (4) présente au moins une rainure (10) s'étendant autour de sa périphérie sur son côté extérieur et/ou son côté intérieur (9).

6. Bougie filtrante selon l'une quelconque des revendications précédentes, **caractériséé en ce que** la paroi de bride (4) présente des alésages (11).

7. Bougie filtrante selon l'une quelconque des revendications précédentes, **caractérisée en ce que** le rebord (5) est doté d'au moins un moyen de fixation pour fixer la bougie filtrante (1).

8. Bougie filtrante selon l'une quelconque des revendications précédentes, **caractérisée en ce que** le tube filtrant fritté (2) est constitué d'une matière pulvérulente et/ou fibreuse.

9. Bougie filtrante selon l'une quelconque des revendications précédentes, **caractérisée en ce que** la matière pulvérulente présente un diamètre moyen de particules d'au moins 200 µm.

10. Bougie filtrante selon l'une quelconque des revendications précédentes, **caractérisée en ce que** la matière fibreuse présente une longueur moyenne d'au moins 1 mm.

11. Bougie filtrante selon l'une quelconque des revendications précédentes, **caractérisée en ce que** la matière fibreuse présente un diamètre moyen d'au moins 40 µm.

12. Procédé de fabrication d'une bougie filtrante (1) selon l'une quelconque des revendications 1 à 11, **caractérisé en ce que**
- dans une première étape, une bride (3) est posée dans une matrice ;
- dans une deuxième étape, la matrice est remplie de matière pouvant fritter jusqu'à ce que la paroi de bride (4) soit enveloppée de matière et l'évidement (8) entièrement rempli de matière ;
- dans une troisième étape, la matière est compressée avec la bride (3) puis
- dans une quatrième étape, l'ébauche de bougie filtrante ainsi obtenue est frittée.

13. Procédé selon la revendication 12, **caractérisé en ce que** la compression est réalisée de manière isostatique.

14. Utilisation d'une bougie filtrante selon l'une quelconque des revendications 1 à 11 dans la filtration de gaz chauds, dans des réacteurs à membrane, en tant que catalyseur, en tant que filtre à air et/ou à gaz, en tant que filtre pour filtrer des liquides et/ou pour séparer et concentrer des matières.
